(19) Europäisches Patentamt
European Patent Office
Office européen des brevets

(11) Veröffentlichungsnummer: **0 208 105**
**B1**

(12) # EUROPÄISCHE PATENTSCHRIFT

(45) Veröffentlichungstag der Patentschrift: **13.07.88**

(51) Int. Cl.[4]: **C 08 G 63/68**, C 08 G 79/04

(21) Anmeldenummer: **86107104.1**

(22) Anmeldetag: **26.05.86**

(54) **Verfahren zur Herstellung von Copolyphosphonaten mit hoher Zähigkeit.**

(30) Priorität: **07.06.85 DE 3520296**

(43) Veröffentlichungstag der Anmeldung: **14.01.87 Patentblatt 87/3**

(45) Bekanntmachung des Hinweises auf die Patenterteilung: **13.07.88 Patentblatt 88/28**

(84) Benannte Vertragsstaaten: **DE FR GB IT**

(56) Entgegenhaltungen:
**EP - A - 0 021 213**
**EP - A - 0 033 826**
**DE - B - 1 199 499**
**DE - B - 1 199 500**

(73) Patentinhaber: **BAYER AG, Konzernverwaltung RP Patentabteilung, D-5090 Leverkusen 1 Bayerwerk (DE)**

(72) Erfinder: **Kauth, Hermann, Dr., Kolpingstrasse 34, D-4150 Krefeld 11 (DE)**
Erfinder: **Reinking, Klaus, Dr., Robert-Stolz-Strasse 16 b, D-5632 Wermelskirchen 1 (DE)**
Erfinder: **Freitag, Dieter, Dr., Hasenheide 10, D-4150 Krefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 208 105 B1

**Beschreibung**

Die Erfindung betrifft ein zweistufiges Verfahren zur Herstellung aromatischer Polyesterphosphonate mit verbesserter Schlag- und Kerbschlagzähigkeit, wonach in erster Stufe aromatische Oligophosphonate mit Hydroxylendgruppen in einer Schmelzumesterung hergestellt werden und in einer zweiten Stufe die so erhaltenen Oligophosphonate in einer Phasengrenzflächenreaktion zum Polyesterphosphonat kondensiert werden. Der Begriff „Polyesterphosphonate" im Sinne der Erfindung schliesst Polycarbonatphosphonate und folglich auch Polyestercarbonatophosphonate sowie Mischungen von Polyesterphosphonaten und Polycarbonatophosphonaten ein.

Aromatische Polyesterphosphonate und aromatische Polycarbonatophosphonate sind bekannt (DE-AS 11 99 499, 11 99 500). Sie werden vorwiegend nach dem Phasengrenzflächenverfahren aus Bisphenolat, Phosphonsäure- und Dicarbonsäuredichloriden oder aus Bisphenolbischlorkohlensäureestern (oder deren Ausgangsprodukten Bisphenol und Phosgen) und Phosphonsäuredichloriden hergestellt. Weil der Einsatz von Phosphonsäuredichloriden im Phasengrenzflächenverfahren leicht Emulsionen entstehen lässt, deren Phasentrennung schwierig oder gar unmöglich ist, hat sich dieses Herstellungsverfahren in der Praxis nicht durchsetzen können.

Polyesterphosphonate und Polycarbonatophosphonate können auch durch Schmelzkondensation aus Bisphenol, Phosphonsäureestern und Carbonsäureestern bzw. aus Bisphenol, Phosphonsäureestern und Diphenylcarbonat hergestellt werden (vgl. z. B. DE-OS 29 25 206, 29 25 208). Sie besitzen eine hohe Wärmeformbeständigkeit, erfüllen aber sehr hohe Anforderungen an die Schlag- und Kerbschlagzähigkeit nicht.

Aufgabe der Erfindung war es daher, Polyesterphosphonate mit gegenüber Schmelzkondensationsprodukten verbesserter Schlag- und Kerbschlagzähigkeit bereitzustellen.

Überraschenderweise wurde nun gefunden, dass eine Zweistufenreaktion zum Erfolg führt, wenn man in erster Stufe durch Schmelzumesterung und -kondensation von Phosphonsäureestern und Diphenolen Oligophosphonate mit Hydroxylendgruppen herstellt und in einer zweiten Stufe die Oligophosphonate mit aromatischen Dicarbonsäurechloriden und/oder Phosgen und gegebenenfalls weiterem Diphenol nach dem Phasengrenzflächenverfahren zu Polyesterphosphonaten kondensiert.

Gegenstand der Erfindung ist also ein Verfahren zur Harstellung von aromatischen Polyesterphosphonaten mit als Zahlenmittel bestimmten Molekulargewichten $\overline{M}_n$ von 5000 bis 200 000, vorzugsweise von 10 000 bis 150 000, insbesondere von 12 000 bis 80 000, und mit molaren Phosphonatgruppen/(Carboxylat-plus Carbonatgruppen)Verhältnissen von 95:5 bis 5:95, vorzugsweise von 80:20 bis 10:90, insbesondere von 65:35 bis 10:90, aus 1) Diphenolen, 2) Phosphonsäurederivaten und 3) aromatischen Dicarbonsäurederivaten und/oder Phosgen, dadurch gekennzeichnet, dass man in einer ersten Stufe Phosphonsäurediarylester mit Diphenolen in der Schmelze umsetzt, bis ein oligomeres Produkt mit einem als Zahlenmittel bestimmten Molekulargewicht $\overline{M}_n$ von 460 bis 20 000, vorzugsweise von 800 bis 10 000, und einer OH-Zahl von 5 bis 240, vorzugsweise von 10 bis 140, entstanden ist und dann in einer zweiten Stufe das oligomere Produkt mit aromatischen Dicarbonsäuredichloriden und/oder Phosgen, gegebenenfalls mit weiteren Diphenolen, nach dem Phasen grenzflächenverfahren kondensiert, bis der Gehalt an phenolischem OH weniger als 0,1, vorzugsweise weniger als 0,05 Gew.-%, bezogen auf resultierendes Polyesterphosphonat, beträgt.

Bevorzugte Diphenole für den Einsatz in der ersten und gegebenenfalls in der zweiten Stufe des erfindungsgemässen Verfahrens sind Verbindungen der Formel

$$HO-Z-OH \qquad (I)$$

worin Z einen zweiwertigen ein- oder mehrkernigen aromatischen Rest mit 6-30 C-Atomen bedeutet, wobei Z derart gebaut ist, dass die beiden OH-Gruppen direkt an je ein C-Atom eines aromatischen Systems gebunden sind.

Besonders bevorzugte Diphenole sind Verbindungen der Formel

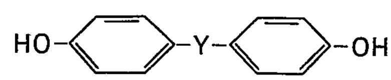 (II)

in der

Y eine Einfachbindung, einen Alkylen- oder Alkylidenrest mit 1-7 C-Atomen, einen Cyckloalkylen- oder Cycloalkylidenrest mit 5-12 C-Atomen, $-O-$, $-S-$, $-\underset{\underset{O}{\|}}{S}-$, $-SO_2-$ oder $-\underset{\underset{O}{\|}}{C}-$ bedeutet,

sowie deren kernalkylierte und kernhalogenierte Derivate z. B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone, und
α,α'-Bis-(hydroxyphenyl)-diisopropylbenzole

sowie deren kernalkylierte und kernhalogenierte Verbindungen, und die Mischungen solcher Diphenole.

Die wichtigsten Diphenol seien nachfolgend aufgezählt:

Bisphenol A, 2,2-Bis-(3-methyl-4-hydroxyphenyl)-propan,
2,2-Bis-(3,5-dimethyl-4-hydroxyphenyl)-propan,
1,1-Bis-(4-hydroxyphenyl)-isobutan,
2,4-Bis-(4-hydroxyphenyl)-2-methylbutan,
1,1-Bis-(4-hydroxyphenyl)-cyclohexan,

4,4'-Dihydroxydiphenylsulfid, 4,4'-Dihydroxydiphenyl,

4,4'-Dihydroxydiphenylsulfon sowie deren di- und tetrahalogenierte Derivate und beliebige Mischungen der genannten Diphenole.

Bevorzugte Phosphonsäurediarylester, die für die Reaktion in der ersten Stufe des erfindungsgemässe Verfahrens eingesetzt werden können, entsprechen der Formel

$$Ar^1-O-\overset{\overset{\displaystyle R}{|}}{\underset{\underset{\displaystyle O}{\|}}{P}}-O-Ar^2 \qquad (III)$$

worin

R $C_1$-$C_{12}$-, vorzugsweise $C_1$-$C_4$-Alkyl, insbesondere Methyl, $C_2$-$C_{12}$-, vorzugsweise $C_2$-$C_4$-Alkenyl, $C_6$-$C_{30}$-, vorzugsweise $C_6$-$C_{12}$-Cycloalkyl, $C_6$-$C_{30}$-, vorzugsweise $C_6$-$C_{12}$-Cycloalkenyl, $C_6$-$C_{30}$-, vorzugsweise $C_6$-$C_{10}$-Aryl, insbesondere Phenyl, $C_7$-$C_{30}$-, vorzugsweise $C_7$-$C_{12}$-Aralkyl, $C_7$-$C_{30}$-, vorzugsweise $C_7$-$C_{12}$-Aralkenyl, wobei die aromatischen Kerne unsubstituiert oder durch 1 bis 5 $C_1$-$C_4$-, vorzugsweise $C_1$-$C_2$-Alkylgruppe, durch 1 bis 5 Halogenatome (F, Cl oder Br) oder durch die genannten Alkylgruppen und Halogenatome substituiert sind, und

$Ar^1$, $Ar^2$ unsubstituierte oder durch 1 bis 5 $C_1$-$C_4$-Alkylreste substituierte Phenylreste bedeuten.

Bevorzugte Phosphonsäureester sind Phenylphosphonsäureester; die bevorzugtesten Phosphonsäureester sind jedoch die Methylphosphonsäureester. Normalerweise wird man aus Kostengründen die Phosphonsäurediphenylester einsetzen.

Die erste Stufe der erfindungsgemässen Verfahrens lässt sich durch Katalysatoren beschleunigen. Bevorzugte Katalysatoren sind beispielsweise Alkoholate und Phenolate der Alkali- und Erdalkalimetalle wie Natriummethylat, Calciummethylat, Natriumphenolat, Kaliumphenolat, Natrium- und Kaliumphenolate der oben beschriebenen Diphenole, Hydride wie Lithiumhydrid, Natriumborhydrid, Calciumhydrid, Oxide wie Lithiumoxid, Natriumoxid, Bariumoxid, Amide wie Natriumamid, Calciumamid, aromatische Stickstoffbasen wie Imidazol, Tetraalkyltitanate wie Titantetraethylat, -tetraisopropylat, -tetrabutylat, Dialkylzinnoxide wie Dibutylzinnoxid, Dialkyldialkoxyzinnverbindungen wie Dibutyldimethoxyzinn, Alkylzinncarboxylate wie Tributylzinnacetat, Dibutylzinndilaurat, und Mischungen dieser Verbindungen. Die Katalysatoren können in Mengen von 0,005 bis 5, vorzugsweise 0,05 bis 2 Gew.-%, bezogen auf eingesetzte Diphenole, verwendet werden.

Die erste Verfahrensstufe wird im allgemeinen bei Temperaturen von 80 bis 340, vorzugsweise 100 bis 320° C, gegebenenfalls unter vermindertem Druck, durchgeführt, wobei die freiwerdenden Phenole abdestilliert werden. Will man die Oligophosphonate verzweigen, so setzt man als Verzweigungsmittel tri- oder tetrafunktionelle Verbindungen wie Triarylphosphate, z. B. Triphenylphosphat, Tri- oder Tetraphenole mit einem oder mehreren aromatischen Ringen, Arylester von tri- oder tetrabasischen aromatischen Carbonsäuren, wie z. B. Trimesinsäuretriphenylester oder Pyromellithsäuretetraphenylester, ein.

Für die zweite Verfahrensstufe bevorzugte aromatische Dicarbonsäuredichloride sind die Dichloride der o-Phthalsäure, Iso-, Terephthalsäure, der Diphenyldicarbonsäuren, der Diphenyletherdicarbonsäuren, der Naphtalindicarbonsäuren und von Gemischen dieser Dicarbonsäuren. Besonders bevorzugte Dichloride sind Iso-/Terephthalsäuredichlorid-Mischungen im Verhältnis 3:7 bis 7:3.

Für die Phasengrenzflächenreaktion können als Katalysatoren Oniumverbindungen wie quatäre Phosphoniumverbindungen, z. B. Triphenylbenzylphosphoniumchlorid, Triphenylmethylphosphoniumjodid, Triphenylethylphosphoniumchlorid, wie quatäre Ammoniumverbindungen, z. B. Trimethylbenzylammoniumchlorid, Triethylbenzylammoniumbromid, Tetrabutylammoniumbromid, wie quatäre Arsoniumverbindungen, z. B. Methyltriphenylarsoniumjodid, Benzyltriphenylarsoniumbromid, und tertiäre Amine, wie z. B. Triethylamin, Tributylamin, N-Ethylpiperidin, N-Ethylmorpholin, eingesetzt werden. Die Phasengrenzflächen-Katalysatoren werden in der Regel in Mengen von 0,02 bis 20, vorzugsweise von 0,2 bis 15 Mol-%, bezogen auf zur Reaktion zu bringende phenolische OH-Gruppen, eingesetzt.

Ein bevorzugter pH-Bereich für die Phasengrenzflächenreaktion liegt bei 8 bis 13.

Bevorzugte Lösungsmittel für die aromatischen Dicarbonsäuredichloride und für die während der Reaktion entstehenden Polyesterphosphonate sind mit Wasser nichtmischbare halogenierte Kohlenwasserstoffe, wie z. B. Methylenchlorid, Chloroform, Di-, Tri- und Tetrachlorethane, Chlorbenzol, Dichlorbenzole und Gemische dieser Lösungsmittel.

Als Verzweigungsmittel für die erfindungsgemäss herzustellenden Polyesterphosphonate können beispielsweise Phosphoroxytrichlorid, Phosphortrichlorid, drei- oder mehrfunktionelle Carbonsäurechloride, wie Trimesinsäuretrichlorid, Cyanursäuretrichlorid, 3,3',4,4'-Benzophenontetracarbonsäuretetrachlorid, 1,4,5,8-Naphthalintetracarbonsäuretetrachlorid oder Pyromellithsäuretetrachlorid, in Mengen von 0,01 bis 2,0 Mol-% (bezogen auf im Endprodukt vorhandene Diphenolreste) oder 3- oder mehrfunktionelle Phenole, wie Phloroglucin,

4,6-Dimethyl-2,4,6-tri-(4-hydroxyphenyl)-hepten-2,

4,6-Dimehtyl-2,4,6-tri-(4-hydroxyphenyl)-heptan,

1,3,5-Tri-(4-hydroxyphenyl)-benzol,

1,1,1-Tri-(4-hydroxyphenyl)-ethan,

Tri-(4-hydroxyphenyl)-phenylmethan,

2,2-Bis-[4,4-bis-(4-hydroxyphenyl)-cyclohexyl)-propan,

2,4-Bis-(4-hydroxyphenyl-isopropyl)-phenol,

Tetra-(4-hydroxyphenyl)-methan,

2,6-Bis-(2-hydroxy-5-methyl-benzyl)-4-methyl-phenol,

2-(4-Hydroxyphenyl)-2-(2,4-dihydroxyphenyl)-propan,
Tetra-(4-[4-hydroxyphenyl-isopropyl]-phenoxy)-methan,
1,4-Bis-[4,4"-dihydroxytriphenyl)-methyl]-benzol

in Mengen von 0,01 bis 2,0 Mol-% (bezogen auf im Endprodukt vorhandene Diphenolreste) verwendet werden. Phenolische Verzweigungsmittel können mit den Diphenolen vorgelegt, Säurechlorid-Verzweigungsmittel können zusammen mit den Säuredichloriden eingetragen werden.

Zur Begrenzung des Molekulargewichts der erfindungsgemäss herzustellenden Polyesterphosphonate können in der zweiten Verfahrensstufe Kettenabbrecher zugesetzt werden. Bevorzugte Ketenabbrecher entsprechen der Formel

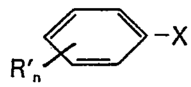

worin

R' ein aliphatischer oder aromatischer Kohlenwasserstoffrest mit 1 bis 18, vorzugsweise 6 bis 12, insbesondere 8 oder 9, Kohlenstoffatomen,

n Null oder eine ganze Zahl von 1 bis 5 und

X 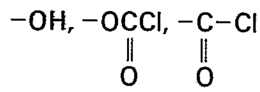

bedeuten. Die Kettenabbrecher werden vorzugsweise in Mengen bis zu 10, vorzugsweise bis zu 7,5 Mol-%, bezogen auf im Endprodukt vorhandene Diphenolreste, zugesetzt.

Für die zweite Verfahrensstufe wird das in der ersten Verfahrensstufe erhaltene Oligophosphonat in der organischen Phase gelöst. In der wässerig-alkalischen Phase werden gegebenenfalls die Diphenole gelöst; zur Vermeidung unerwünschter Verfärbungen der Endprodukte können der wässerigen Phase geringe Mengen Reduktionsmittel, wie z. B. Natriumborhydrid oder Natriumsulfit, eingetragen werden. Unter heftigem Rühren wird eine Lösung der aromatischen Dicarbonssäuredichlorid und/oder Phosgen – gleichzeitig oder nacheinander – zugeführt. Die Temperatur hält man vorzugsweise in einem Bereich von 0 bis 40° C.

Die Isolierung der Endprodukte kann wie bei Phasengrenzflächenverfahren üblich erfolgen: Danach wird die organische Phase abgetrennt, salzfrei gewaschen und eingedampft. Die letzte Stufe der Aufarbeitung kann vorzugsweise in einem Ausdampfextruder stattfinden.

Die erfindungsgemäss hergestellten Copolyphosphonate finden vornehmlich zur Herstellung von Formkörpern Verwendung, die hohe Kerschlagzähigkeit aufweisen sollen, z. B. Steckerleisten, Lampenhalterungen, Schalterkästen.

Die Verarbeitung erfolgt in der Regel durch Spritzguss bei Massetemperaturen von 280 bis 360° C und bei Formtemperaturen von 80 bis 150° C, vorzugsweise 90 bis 120° C.

*Beispiele*

Die Bestimmung der relativen Viskosität $\eta_{rel}$ erfolgte an einer Lösung von 0,5 g Substanz in 100 ml Dichlormethanlösung bei 25° C.

Die Prüfung der Schlagzähigkeit $a_n$ und der Kerbschlagzähigkeit $a_k$ erfolgte nach Charpy gemäss DIN 53 453.

*A. Herstellung der Oligophosphonate*

*Beispiel 1* (6 Mole Diphenol/5 Mole Phosphonsäureester)

5750 g Bisphenol A, 5180 g Methylphosphonsäurediphenylester und 36 g Natriumphenolat wurden unter Stickstoff bei 180° C vermischt. Im Laufe von 3 Stunden wurde unter einem von 450 auf 200 mbar absinkenden Druck Phenol über eine Kolonne abdestilliert. Anschliessend wurde im Laufe von weiteren 2,5 Stunden der Druck auf 10 mbar gesenkt, die Temperatur auf 200° C erhöht und weiter Phenol abdestilliert. Restliches Phenol ging bei 200° C/0,5 mbar über. Das Reaktionsgefäss wurde mit Stickstoff belüftet, das Produkt auf Blech gegossen und abgekühlt.

OH-Zahl: 66.

*Beispiel 2* (3 Mole Diphenol/2 Mole Phosphonsäureester)

6840 g Bisphenol A, 4960 g Methylphosphonsäurediphenylester und 35 g Natriumphenolat wurden, wie im Beispiel 1 beschrieben, umgesetzt.

OH-Zahl: 130.

*Beispiel 3* (9 Mole Diphenol/8 Mole Phosphonsäureester)

6156 g Bisphenol A, 5952 g Methylphosphonsäurediphenylester und 35 g Natriumphenolat wurden, wie in Beispiel 1 beschrieben, umgesetzt.

OH-Zahl: 47.

*Beispiel 4* (4 Mole Diphenol/3 Mole Phosphonsäureester)

5477 g Bisphenol A, 4464 g Methylphosphonsäurediphenylester und 34 g Natriumphenolat wurden, wie in Beispiel 1 beschrieben, umgesetzt.

OH-Zahl: 105.

*B. Umsetzung der Oligophosphonate im Phasengrenzflächenverfahren*

*Beispiel 5*

777,6 g Bisphenol A und 18 g Tetrabutylammoniumbromid wurden in 35,8 kg Wasser und 828 g 45 gew.-%iger Natronlauge gelöst. Unter Rühren wurden 1310 g Oligophosphonat aus Beispiel 4, gelöst in 23,3 g Dichlormethan, zugegeben.

Dieses Gemisch wurde mit 1887 g einer 40 gew.-%igen Lösung von Iso-/Terephthalsäuredichlorid (1:1) in Dichlormethan vereinigt. Danach wurden 300 g Phosgen eingeleitet, wobei der pH-Wert durch Zugabe verdünnter Natronlauge bei 9 bis 11 gehalten wurde. Nach der Beendigung des Phosgen-Einleitens fügte man 4,8 ml N-Ethylpiperidin zu und liess noch 1 Stunde nachreagieren. Die Temperatur des Reaktionsgemisches betrug während der gesamten Umsetzung 20 bis 25° C.

Nach Abtrennung der wässerig-alkalischen Phase wurde die organische Phase zunächst mit verdünnter Phosphorsäure, dann mit Wasser salzfrei gewaschen und ca. 50% des Dichlormethans unter Normaldruck abdestilliert. Die verbleibende Lösung wurde mit 10 l Chlorbenzol verdünnt und die Abdestillation des Dichlormethans fortgesetzt, bis die Sumpftemperatur ca. 80° C betrug, das Polyesterphosphonat sodann im Vakuumextruder bei 320° C vom Chlorbenzol befreit, als Strang abgezogen und granuliert. Das Granulat besass eine relative Lösungsviskosität $\eta_{rel}$ von 1,245 und einen Gehalt an phenolischem OH von 0,01 Gew.-%.

*Beispiel 6*

1280 g Bisphenol A und 9 g Tetrabutylammoniumbromid wurden in 36 kg Wasser und 1272 g 45 gew.-%iger Natronlauge gelöst. Unter Rühren wurden 655 g Oligophosphonat aus Beispiel 4, gelöst in 17,9 l Dichlormethan, zugegeben.

Dieses Gemisch wurde mit 2413 g einer 40 gew.-%igen Lösung von Iso-/Terephthalsäuredichlorid (1:1) in Chlorbenzol vereinigt. Danach wurden 350 g Phosgen eingeleitet, wobei der pH-Wert durch Zugabe verdünnter Natronlauge bei 9 bis 11 gehalten wurde. Nach der Beendigung des Phosgen-Einleitens gab man 12 g Phenol und 2,4 ml N-Ethylpiperidin zu und liess 1 Stunde nachreagieren. Die Aufarbeitung erfolgte analog Beispiel 5.

$\eta_{rel}$ = 1,312; Gehalt an phenolischem OH: 0,005 Gew.-%.

*Beispiel 7*

Nach der in Beispiel 5 beschriebenen Verfahrensweise wurden 913 g Bisphenol A in 32 l Wasser und 907 g 45 gew.-%iger Natronlauge gelöst und mit 875 g Oligophosphonat aus Beispiel 4, gelöst in 16 l Dichlormethan, 1502 g einer 40 gew.-%igen Lösung von Iso-/Terephthalsäuredichlorid (1:1) in Dichlormethan und 260 g Phosgen umgesetzt. Als Katalysatoren wurden 12 g Tetrabutylammoniumbromid und 3,2 ml N-Ethylpiperidin verwendet.

$\eta_{rel}$ = 1,303; Gehalt an phenolischem OH: 0,02 Gew.-%.

*Beispiel 8*

Nach der im Beispiel 6 beschriebenen Verfahrensweise wurden 2096 g Bisphenol A in 50 l Wasser und 1740 g 45 gew.-%iger Natronlauge gelöst und mit 834 g Oligophosphonat aus Beispiel 1, gelöst in 25 l Dichlormethan, 2041 g einer 40 gew.-%igen Lösung von Iso/Terephtalsäuredichlorid (1:1) in Dichlormethan und 1120 g Phosgen umgesetzt. Als Kettenabbrecher wurden 47,5 g Phenol, als Katalysatoren 31,2 g Tetrabutylammoniumbromid und 20,5 ml N-Ethylpiperidin eingesetzt.

$\eta_{rel}$ = 1,292; Gehalt an phenolischem OH: 0,013 Gew.-%.

*Beispiel 9*

Analog Beispiel 6 wurden 1430 g Bisphenol A in 50 l Wasser und 1305 g 45 gew.-%iger Natronlauge gelöst und mit 1668 g Oligophosphonat aus Beispiel 1, gelöst in 25 l Dichlormethan, 1531 g einer 40 gew.-%igen Lösung von Iso-/Terephthalsäuredichlorid (1:1) in Dichlormethan und 900 g Phosgen umgesetzt. Als Kettenabbrecher wurden 10,2 g Phenol, als Katalysatoren 23,4 g Tetrabutylammoniumbromid und 15,2 ml N-Ethylpiperidin eingesetzt.

$\eta_{rel}$ = 1,251; Gehalt an phenolischem OH: 0,023 Gew.-%.

*Beispiel 10*

2788 g Bisphenol A, 18,9 g Phenol und 42,5 g Tetrabutylammoniumbromid wurden in 65 l Wasser und 2373 g 45 gew.-%iger Natronlauge gelöst. Unter Rühren wurden 1668 g Oligophosphonat aus Beispiel 1, gelöst in 33 l Dichlormethan, zugegeben. In dieses Gemisch wurden 1700 g Phosgen eingeleitet. Anschliessend versetzte man mit 27,9 ml N-Ethylpiperidin, liess 1 Stunde nachreagieren und arbeitete analog Beispiel 5 auf.

$\eta_{rel}$ = 1,310; Gehalt an phenolischem OH: 0,018 Gew.-%.

*Beispiel 11*

Analog Beispiel 10 wurden 3800 g Bisphenol A, 24 g Phenol und 54,7 g Tetrabutylammoniumbromid in 64,3 l Wasser und 3051 g 45 gew.-%iger Natronlauge gelöst. Unter Rühren wurden 556 g Oligophosphonat aus Beispiel 1, gelöst in 33 l Dichlormethan, zugegeben.

In dieses Gemisch wurden 2400 g Phosgen eingeleitet. Anschliessend versetzte man mit 36 ml N-Ethylpiperidin, liess 1 Stunde nachreagieren und arbeitete analog Beispiel 5 auf.

$\eta_{rel}$ = 1,315; Gehalt an phenolischem OH: 0,01 Gew.-%.

*Vergleich 5a*

2926 g Bisphenol A, 1378 g Methylphosphonsäurediphenylester, 1714 g Iso-/Terephthalsäurediphenylester (1:1), 541 g Diphenylcarbonat und 0,5 g Natriumphenolat wurden unter Stickstoff bei 250° C intensiv verrührt. Anschliessend wurde innerhalb von 5 Stunden bei einer von 250° C auf 280° C ansteigenden Temperatur und einem von 250 mbar auf 10 mbar allmählich absinkenden Druck über eine auf 100° C beheizte Kolonne Phenol abdestilliert. Die Reaktion wurde anschliessend 1,5 Stunden bei 290 bis 310° C und bei einem Druck von 0,3 mbar fortgesetzt, wobei die Umdrehungszahl des Rührers auf einen konstanten Wert absank. Nach Belüften des Rührautoklaven mit Stickstoff liess man das Polyesterphosphonat bei 300° C unter Stillstand des Rührers 1 Stunde sich absetzen und isolierte das Cokondensat anschliessend durch Abspinnen unter Druck (ca. 10 bar) und Granulieren des Schmelzstranges.

$\eta_{rel}$ = 1,322.

*Vergleich 6a*

1420 g Bisphenol A, 344 g Methylphosphonsäurediphenylester, 1143 g Iso-/Terephtalsäurediphenylester (1:1), 339 g Diphenylcarbonat und 0,3 g Natriumphenolat wurden analog Vergleich 5a umgesetzt.

$\eta$ = 1,306.

*Vergleich 7a*

1445 g Bisphenol A, 517 g Methylphosphonsäurediphenylester, 1000 g Iso-/Terephthalsäurediphenylester (1:1), 304 g Diphenylcarbonat und 0,2 g Natriumphenolat wurden analog Vergleich 5a umgesetzt.

$\eta_{rel} = 1{,}282$.

*Vergleich 8a*

773,5 g Bisphenol A, 172 g Methylphosphonsäurediphenylester, 357 g Iso-/Terephthalsäurediphenylester (1:1), 373,5 g Diphenylcarbonat und 0,2 g Natriumphenolat wurden analog Vergleich 5a umgesetzt.

$\eta_{rel} = 1{,}312$.

*Vergleich 9a*

778 g Bisphenol A, 344,4 g Methylphosphonsäurediphenylester, 268 g Iso-/Terephthalsäurediphenylester (1:1), 289,2 g Diphenylcarbonat und 0,3 g Natriumphenolat wurden analog Vergleich 5a umgesetzt.

$\eta_{rel} = 1{,}275$.

*Vergleich 10a*

2503 g Bisphenol A, 2354 g Diphenylcarbonat, 243 g Methylphosphonsäurediphenylester und 0,1 g Natriumphenolat wurden unter Stickstoff bei 230° C intensiv verrührt. Anschliessend wurde innerhalb von 5 Stunden bei einer von 230° C auf 280° C ansteigenden Temperatur und einem von 250 mbar auf 10 mbar allmählich absinkenden Druck über eine auf 100° C beheizte Kolonne Phenol abdestilliert. Die Reaktion wurde anschliessend 1,5 Stunden bei 290 bis 310° C und bei einem Druck von 0,3 mbar fortgesetzt, wobei die Umdrehungszahl des Rührers auf einen konstanten Wert absank. Nach Belüften des Rührautoklaven mit Stickstoff liess man das Polyesterphosphonat bei 300° C unter Stillstand des Rührers 1 Stunde sich absetzen und isolierte das Cokondensat anschliessend durch Abspinnen unter Druck (ca. 10 bar) und Granulieren des Schmelzstranges.

$\eta_{rel} = 1{,}330$.

*Vergleich 11a*

3142 g Bisphenol A, 937 g Methylphosphonsäurediphenylester, 2353 g Diphenylcabonat und 0,2 g Natriumphenolat wurden unter Stickstoff bei 230° C intensiv verrührt. Anschliessend wurde innerhalb von 5 Stunden bei einer von 230° C auf 280° C ansteigenden Temperatur und einem von 250 mbar auf 10 mbar allmählich absinkenden Druck über eine auf 100° C beheizte Kolonne Phenol abdestilliert. Die Reaktion wurde anschliessend 1,5 Stunden bei 290 bis 310° C und bei einem Druck von 0,3 mbar fortgesetzt, wobei die Umdrehungszahl des Rührers auf einen konstanten Wert absank. Nach Belüften des Rührautoklaven mit Stickstoff liess man das Polyesterphosphonat bei 300° C unter Stillstand des Rührers 1 Stunde sich absetzen und isolierte das Cokondensat anschliessend durch Abspinnen unter Druck (ca. 10 bar) und Granulieren des Schmelzstranges.

$\eta_{rel} = 1{,}38$.

*Tabelle*

| Beispiel/ Vergleich | $a_k$ [kJ/m²] |
|---|---|
| 5/ 5a | 7/2 |
| 6/ 6a | 27/5 |
| 7/ 7a | 10/3 |
| 8/ 8a | 15/3 |
| 9/ 9a | 9/2 |
| 10/10a | 12/4 |
| 11/11a | 25/3 |

Schlagzähigkeit $a_n$: sämtliche Proben «nicht gebrochen».

**Patentansprüche**

1. Verfahren zur Herstellung von aromatischen Polyesterphosphonaten mit als Zahlenmittel bestimmten Molekulargewichten $\overline{M}_n$ von 5000 bis 200 000 und mit molaren Phosphonatgruppen/(Carboxylat-plus Carbonatgruppen)Verhältnissen von 95:5 bis 5:95 aus 1) Diphenolen, 2) Phosphonsäurederivaten und 3) aromatischen Dicarbonsäurederivaten und/oder Phosgen, dadurch gekennzeichnet, dass man in einer ersten Stufe Phosphonsäurediarylester mit Diphenolen in der Schmelze umsetzt, bis ein oligomeres Produkt mit einem als Zahlenmittel bestimmten Molekulargewicht $\overline{M}_n$ von 460 bis 20 000 und einer OH-Zahl von 5 bis 240 entstanden ist und dann in einer zweiten Stufe das oligomere Produkt mit aromatischen Dicarbonsäuredichloriden und/oder Phosgen, gegebenenfalls mit weiteren Diphenolen, nach dem Phasengrenzflächenverfahren kondensiert, bis der Gehalt an phenolischem OH weniger als 0,1 Gew.-%, bezogen auf resultierendes Polyesterphosphonat, beträgt.

2. Verfahren nach Anspruch 1, dadurch gekennzeichnet, dass die aromatischen Polyesterphosphonate als Zahlenmittel bestimmte Molekulargewichte von 10 000 bis 150 000 besitzen.

3. Verfahren nach Anspruch 1, dadurch gekennzeichnet, dass die aromatischen Polyesterphosphonate als Zahlenmittel bestimmte Molekulargewichte von 12 000 bis 80 000 besitzen.

4. Verfahren nach Ansprüchen 1-3, dadurch gekennzeichnet, dass die aromatischen Polyesterphosphonate molare Phosphonatgruppen/(Carboxylat-plus Carbonatgruppen)-Verhältnisse von 80:20 bis 10:90 besitzen.

5. Verfahren nach Ansprüchen 1-3, dadurch gekennzeichnet, dass die aromatischen Polyesterphosphonate molare Phosphonategruppen/(Carboxylat-plus Carbonatgruppen)-Verhältnisse von 65:35 bis 10:90 besitzen.

6. Verfahren nach Ansprüchen 1-5, dadurch gekennzeichnet, dass man die erste Verfahrensstufe so weit führt, bis ein oligomeres Produkt mit einem als Zahlenmittel bestimmten Molekulargewicht von 800 bis 10 000 und einer OH-Zahl von 10 bis 140 enstanden ist.

7. Verfahren nach Ansprüchen 1-6, dadurch gekennzeichnet, dass man die zweite Verfahrens-

stufe so weit führt, bis der Gehalt an phenolischem OH weniger als 0,05 Gew.-%, bezogen auf resultierendes Polyesterphosphonat, beträgt.

8. Verfahren nach Ansprüchen 1-7, dadurch gekennzeichnet, dass man als Diphenol 1) Bisphenol A einsetzt.

9. Verfahren nach Ansprüchen 1-8, dadurch gekennzeichnet, dass man als Phosphonsäurederivat 2) Methylphosphonsäurediphenylester einsetzt.

10. Verfahren nach Ansprüchen 1-9, dadurch gekennzeichnet, dass man als aromatische Dicarbonsäurederivate 3) ein Gemisch von Iso- und Terephthalsäuredichlorid im Verhältnis 3:7 bis 7:3 einsetzt.

## Claims

1. Process for the preparation of aromatic polyester phosphonates having number average molecular weights $\overline{M}_n$ of from 5,000 to 200,000 and molar ratios of phosphonate groups/(carboxylate plus carbonate groups) of from 95:5 to 5:95 from 1) diphenols, 2) phosphonic acide derivatives and 3) aromatic dicarboxylic acid derivatives and/or phosgene, characterised in that in a frist stage, phosphonic acide diaryl esters are reacted with diphenols in the melt until an oligomeric product having a number average molecular weight $\overline{M}_n$ of from 460 to 20,000 and an OH number of from 5 to 240 is obtained, and the oligomeric product is then condensed in a second stage with aromatic dicarboxylic acid dichlorides and/or phosgene by the phase interface process, optionally together with other diphenols, until the phenolic OH group content is less than 0.1% by weight, based on the resulting polyester phosphonate.

2. Process according to claim 1, characterised in that the aromatic polyester phosphonates have number average molecular weights of from 10,000 to 150,000.

3. Process according to claim 1, characterised in that the aromatic polyester phosphonates have number average molecular weights of from 12,000 to 80,000.

4. Process according to claims 1-3, characterised in that the aromatic polyester phosphonates have molar ratios of phosphonate groups/(carboxylate plus carbonate groups) of from 80:20 to 10:90.

5. Process according to claims 1-3, characterised in that the aromatic polyester phosphonates have molar rations of phosphonate groups/(carboxylate plus carbonate groups) of from 65:35 to 10:90.

6. Process according to claims 1-5, characterised in that the first stage of the process is continued until an oligomeric product having a number average molecular weight of from 800 to 10,000 and an OH number of from 10 to 140 is obtained.

7. Process according to claims 1-6, characterised in that the second stage of the process is continued until the phenolic OH group content is less than 0.05% by weight, based on the resulting polyester phosphonate.

8. Process according to claims 1-7, characterised in that the diphenol 1) used is bisphenol A.

9. Process according to claims 1-8, characterised in that the phosphonic acid derivative 2) used is methyl phosphonic acid diphenyl ester.

10. Process according to claims 1-9, characterised in that the aromatic dicarboxylic acid derivatives 3) used are a mixture of iso- and terephalic acid dichloride in a ratio of from 3:7 to 7:3.

## Revendications

1. Procédé pour préparer des polyesterphosphonates aromatiques présentant des poids moléculaires moyens en nombre ($\overline{M}_n$) de 5000 à 200 000 et des rapports molaires groupes phosphonate/groupes carboxylate plus carbonate de 95:5 à 5:95, obtenus à partir 1) de diphénols, 2) de dérivés d'acides phosphoniques et 3) de dérivés d'acides dicarboxyliques aromatiques et/ou de phosgène,
procédé caractérisé en ce que, dans une première étape, on fait réagir un ester diarylique de l'acide phosphonique avec des diphénols en masse fondue jusqu'à obtenir un produit oligomère ayant un poids moléculaire moyen en nombre $\overline{M}_n$ de 460 à 20 000 et un indice de OH de 5 à 240 puis, dans une seconde étape, on condense le produit oligomère avec des dichlorures d'acides dicarboxyliques aromatiques et/ou avec du phosgène, éventuellement avec d'autres diphénols, selon le procédé de réaction en interface ou en couche limite des phases, jusqu'à ce que la teneur en des groupes OH phénoliques devienne inférieure à 0,1% en poids, sur la base du polyesterphosphonate résultant.

2. Procédé selon la revendication 1, caractérisé en ce que les polyesterphosphonates aromatiques présentent des poids moléculaires moyens en nombre allant de 10 000 à 150 000.

3. Procédé selon la revendication 1, caractérisé en ce que les polyesterphosphonates aromatiques possèdent des poids moléculaires moyens en nombre allant de 12 000 à 80 000.

4. Procédé selon les revendications 1 à 3, caractérisé en ce que les polyesterphosphonates aromatiques présentent des rapports entre les groupes phosphonate et les groupes carboxylate plus carbonate allant de 80:20 à 10:90.

5. Procédé selon les revendications 1 à 3, caractérisé en ce que les polyesterphosphonates aromatiques possèdent des rapports molaires entre les groupes phosphonate et les groupes carboxylate plus carbonate allant de 65:35 à 10:90.

6. Procédé selon les revendications 1 à 5, caractérisé en ce qu'on conduit la première étape du procédé jusqu'à obtenir un produit oligomère ayant un poids moléculaire moyen en nombre allant de 800 à 10 000 et un indice de OH allant de 10 à 140.

7. Procédé selon les revendications 1 à 6, caractérisé en ce qu'on conduit la seconde étape du procédé jusqu'à ce que la teneur en OH phénolique

soit inférieure à 0,05% en poids, sur la base du polyesterphosphonate résultant.

8. Procédé selon les revendications 1 à 8, caractérisé en ce qu'on utilise comme dérivé 2) d'acide phosphonique l'ester diphénylique de l'acide métylphosphonique.

10. Procédé selon les revendications 1 à 9, caractérisé en ce qu'on utilise comme dérivés d'acides dicarboxyliques aromatiques 3) un mélange, selon un rapport de 3:7 à 7:3, du dichlorure de l'acide isophtalique et du dichlorure de l'acide téréphtalique.